# EUROPÄISCHE PATENTANMELDUNG

(11) **EP 1 881 426 A1**
(43) Veröffentlichungstag der Anmeldung: **23.01.2008**
(21) Anmeldenummer: 07112241.0
(22) Anmeldetag: 11.07.2007
(51) Int. Cl.: G06F 17/30, H04L 29/06

(54) **Verfahren und Geräte zum Zwischenspeichern von Daten in einem Mobilfunknetz**

(30) Priorität: 17.07.2006 DE 102006033301
(71) Anmelder: Vodafone Holding GmbH, 40027 Düsseldorf (DE)
(72) Erfinder: Staube, Christian, 40215, Düsseldorf (DE); Hericks, Bernd, 46509, Xanten (DE); Lien, Tam, 40599, Düsseldorf (DE)
(74) Vertreter: Weisse, Renate

(57) **Zusammenfassung**

Die Erfindung betrifft ein Vermittlungsverfahren für ein Mobilfunknetz (10), mit dem Daten (30, 52) von einem Vermittlungsserver (40) über das Mobilfunknetz (10) zu einem Mobilfunkendgerät (14) übertragen und von dem Mobilfunkendgerät (14) verarbeitet werden. Dabei werden Daten (30), welche bereits einmal von dem Vermittlungsserver (40) durch das Mobilfunkendgerät (14) angefordert wurden, in einem Zwischenspeicher (28, 50) für den späteren Zugriff gespeichert. Weiterhin betrifft die Erfindung ein Mobilfunkendgerät (14) für ein Mobilfunknetz (10). Das Mobilfunkendgerät (14) enthält einen Zwischenspeicher (28), welcher Daten (30, 52, 90) aus einem Datennetzwerk (70) und/oder Zugriffsadressen für einen späteren Zugriff zwischenspeichert. Weiterhin betrifft die Erfindung ein Vermittlungsserver (40) in einem Mobilfunknetz (10), welcher Daten (30, 52) aus einem Datennetzwerk (70) über das Mobilfunknetz (10) an ein Mobilfunkendgerät (14) vermittelt. Der Vermittlungsserver (40) enthält einen Zwischenspeicher (50), welcher Daten (30, 52) aus dem Datennetzwerk (70) und/oder Zugriffsadrcsscn bei Anforderung des Mobilfunkendgcräts (14) für einen erneuten Zugriff zwischenspeichert.

## Beschreibung

### Technisches Gebiet

Die Erfindung betrifft ein Vermittlungsverfahren für ein Mobilfunknetz, insbesondere nach dem GSM- oder UMTS-Standard, wobei Daten von einem Vermittlungsserver über das Mobilfunknetz zu wenigstens einem Mobilfunkendgerät übertragen und von dem Mobilfunkendgerät verarbeitet werden.

Weiterhin betrifft die Erfindung ein Mobilfunkendgerät für ein Mobilfunknetz, insbesondere nach dem GSM- oder UMTS-Standard, enthaltend
(a) eine Steuereinheit mit einem Prozessor und einem Arbeitsspeicher,
(b) ein Bedienungsmodul zum Bedienen des Mobilfunkendgeräts,
(c) eine Anzeige,
(d) eine Sende und/oder Empfangseinheit zum Austauschen von Daten über das Mobilfunknetz,
(e) eine Schnittstelle für den Empfang von Daten aus einem Datennetzwerk. Ferner betrifft die Erfindung einen Vermittlungsserver in einem Mobilfunknetz, welcher Daten aus einem Datennetzwerk über das Mobilfunknetz an ein Mobilfunkendgerät vermittelt, enthaltend

(a) eine Steuereinheit mit einem Prozessor und einem Arbeitsspeicher,
(b) eine Schnittstelle zum Datennetzwerk,
(c) eine Verbindung zu dem Mobilfunkendgerät.

### Stand der Technik

Bekannt ist die Verwendung eines Zwischenspeichers, auch Puffer oder Cache genannt, für Datenströme. Dies kommt besonders im Bereich der Computertechnik zur Anwendung. Dabei werden Daten eines Speichers in einem schnellen Zwischenspeicher gespeichert. Ein Zwischenspeicher enthält somit Kopien von Inhalten eines anderen Speichers. Die Ziele beim Einsatz eines Zwischenspeichers sind eine Verringerung der Zugriffszeit bzw. eine Verringerung der Anzahl der Zugriffe auf den zwischengespeicherten Speicher. Ein weiterer Effekt beim Einsatz von Zwischenspeichern ist die verringerte Übertragungsratenanforderung an den zwischengespeicherten Speicher. Dadurch, dass oftmals der Großteil der Anfragen vom Zwischenspeicher beantwortet werden kann, sinkt die Anzahl der Zugriffe und damit die Übertragungsratenanforderung an den zwischengespeicherten Speicher.

In der Computertechnik werden Zwischenspeicher beispielsweise für Festplatten (Disk-Cache), für Netzwerke (Schnittstellenpuffer) und für Hauptspeicher (Prozessorcache) benutzt. Die Daten werden von einer Festplatte, einem Netzwerk oder einem Hauptspeicher geladen und in einem schnelleren Zwischenspeicher gespeichert. Das Benutzergerät bzw. der Prozessor des Benutzergeräts greift auf diese Daten erst später zu. Der Zugriff auf den Zwischenspeicher kann schneller vorgenommen werden, als der direkte Zugriff auf das Netzwerk, eine Festplatte oder einen Hauptspeicher. Weiterhin ist auch der Zwischenspeicher bei Webbrowsern bekannt. Dieser dient dazu, aus dem Internet übertragene Webseiten zu speichern. Dadurch wird bei einer wiederholten Anforderung einer Webseite eine erneute Übertragung aus dem Internet vermieden. Der Zugriff auf die Webseite wird beschleunigt.

Über ein Mobilfunknetz können Mobilfunkteilnehmer mittels eines Mobilfunkendgeräts kommunizieren. Dabei kann eine Verbindung zu mindestens einem anderen Mobilfunkendgerät, einem Festnetzanschluss, dem Internet oder anderen Computernetzwerken hergestellt werden. Mobilfunkendgeräte sind beispielsweise Handys, PDAs (**P**ersonal **D**igital **A**ssistant) mit Mobilfunkmodul oder Laptops mit Mobilfunkkarten im PCMCIA-Standard und PCI Express und USB. Zum Senden und Empfangen von Daten über das Mobilfunknetz enthalten Mobilfunkendgeräte eine Mobilfunkeinheit mit Antenne. Mittlerweile eignen sich Mobilfunkendgeräte nicht nur primär zum Senden und Empfangen von Sprachdaten. Durch große, farbige Anzeigen können empfangene Bilder oder Videosequenzen dargestellt werden. Außerdem sind zunehmend Funktionalitäten zur Nutzung von Internet-Diensten, wie beispielsweise Webseiten, E-Mails, Newsgroups und Chatrooms im Mobilfunkendgerät enthalten. Der Bedarf von schnellen, datenoptimierten Übertragungen in Mobilfunknetzen wächst immer weiter an.

Dieser Umstand wird bei der Entwicklung von Mobilfunknetzen berücksichtigt. Mobilfunknetze der zweiten Generation (2G), beispielsweise im GSM-Standard (GSM= Globel System for Mobile communication) sind zwar prinzipiell datenfähig, aber auf die Sprachübertragung optimiert. Mit der Einführung des GPRS-Standards (GPRS= General Paket Radio Service) wurde eine Zwischengeneration (2.5G) geschaffen. Dabei wird ein Mobilfunknetz um die Fähigkeiten zur paketorientierten Datenübertragung erweitert, aber weiterhin ein 2G-Funknetz benutzt. Dies ermöglicht die Nutzung von Datendiensten, etwa im Internet. Mobilfunknetze der dritten Generation sind datenoptimiert und haben höhere Datenübertragungsraten. So wird die Übertragung von großen Datenmengen ohne lange Wartezeiten möglich. Internet- oder Multimedia-Dienste können ohne Einschränkung genutzt werden. Der wichtigste 3G-Standard ist UMTS (Universal Mobile Telecommunications System).

Derzeit ist die Datenübertragungsrate in Mobilfunknetzen kleiner als die Übertragungsrate über schnelle Festnetzanschlüsse, beispielsweise im DSL-Standard (DSL= Digital Subscriber Line). Ein Mobilfunkteilnehmer muss zu Gunsten der Mobilität auf die zügige und damit komfortable Übermittlung von großen Datenmengen bei einer schnellen Festnetzverbindung verzichten und Wartezeiten in Kauf nehmen.

### Offenbarung der Erfindung

Aufgabe der Erfindung ist es daher, die Nachteile des Standes der Technik zu vermeiden und die Übertragung von Daten in einem Mobilfunknetz Ressourcen schonend zu beschleunigen.

Erfindungsgemäß wird die Aufgabe durch ein Vermittlungsverfahren für ein Mobilfunknetz, insbesondere nach dem GSM- oder UMTS-Standard, zur Übertragung von Daten von einem Vermittlungsserver über das Mobilfunknetz zu einem Mobilfunkendgerät der eingangs genannten Art mit folgendem Verfahrensschritt gelöst:
Daten, welche bereits einmal von dem Vermittlungsserver durch das Mobilfunkendgerät angefordert wurden, werden in einem Zwischenspeicher für den späteren Zugriff gespeichert.

Weiterhin wird die Aufgabe dadurch gelöst, dass bei einem Mobilfunkendgerät für ein Mobilfunknetz, insbesondere nach dem GSM- oder UMTS-Standard der eingangs genannten Art

### (f) ein Zwischenspeicher vorgesehen ist, in welchem Daten aus dem Datennetzwerk und/oder Zugriffsadressen für einen späteren Zugriff zwischengespeichert werden.

Ferner wird die Aufgabe dadurch gelöst, dass bei einem Vermittlungsserver in einem Mobilfunknetz zur Vermittlung von Daten aus einem Datennetzwerk über das Mobilfunknetz an ein Mobilfunkendgerät der eingangs genannten Art

### (d) ein Zwischenspeicher vorgesehen ist, welcher Daten aus dem Datennetzwerk und/oder Zugriffsadressen bei Anforderung des Mobilfunkendgeräts für einen erneuten Zugriff auf dieselben Daten und/oder Zugriffsadressen zwischenspeichert.

Durch das Vermittlungsverfahren mit der Zwischenspeicherung von übertragenen Daten können diese bei einem späteren Zugriff wieder verwendet werden. Die Daten müssen nicht erneut und zeitaufwendig angefordert und über das Mobilfunknetz an einen Mobilfunkteilnehmer übermittelt werden. Der Mobilfunkteilnehmer verfügt durch das erfindungsgemäße Verfahren wesentlich schneller über die angeforderten Daten. Ein weiterer Vorteil für den Mobilfunkteilnehmer ist die Kostenersparnis durch die Vermeidung einer erneuten, gebührenpflichtigen Übertragung bereits übermittelter Daten. Außerdem wird das Mobilfunknetz durch die Vermeidung erneuter Übertragungen bereits übermittelter Daten entlastet.

Mit Hilfe des in einem Mobilfunkendgerät enthaltenen Zwischenspeichers werden übermittelte Daten für einen späteren Zugriff gespeichert. Dadurch entfällt bei einer Anforderung von Daten durch den Mobilfunkteilnehmer oder einem mit dem Mobilfunkendgerät verbundenem Gerät die zeitaufwendige Übertragung der Daten über das Mobilfunknetz. Der Mobilfunkteilnehmer oder das Gerät erhält die angeforderten Daten umgehend aus dem Zwischenspeicher und damit deutlich schneller als durch Übermittlung über das Mobilfunknetz zugestellt. Ein weiterer Vorteil ist dadurch gegeben, dass der Zeitpunkt der Übertragung frei wählbar ist. So kann beispielsweise ein Übermittlungszeitraum gewählt werden, bei dem eine geringe Auslastung des Mobilfunknetzes vorliegt, um die Netzwerkressourcen zu schonen, oder in dem ein besonders günstiger Tarif für eine Verbindung liegt.

Mit dem in einem Vermittlungsserver enthaltenen Zwischenspeicher werden Daten, die durch den Vermittlungsserver von einem Datennetz über das Mobilfunknetz an ein Mobilfunkendgerät vermittelt wurden, gespeichert. Bei einer erneuten Anforderung gleicher Daten durch das Mobilfunkendgerät muss der Vermittlungsserver diese Daten nicht beim Datennetzwerk abfragen und übertragen. Dadurch wird die Übertragung der Daten zum Mobilfunkendgerät beschleunigt. Des Weiteren werden durch die Vermeidung einer erneuten Datenabfrage beim Datennetzwerk Verbindungskosten eingespart und die Verbindung bzw. das Datennetzwerk entlastet.

Ein weiterer Vorteil ergibt sich durch die Möglichkeit, dass der Vermittlungsserver bei einer erneuten Anforderung eines Datenblocks durch ein Mobilfunkendgerät den bereits früher übertragenen und zwischengespeicherten Datenblock mit der aktuellen Version im Datennetzwerk vergleichen kann. Dadurch kann der Unterschied zwischen dem bereits übertragenen und den aktuellen Datenblock ermittelt werden. Im Anschluss werden nur die Unterschiede über das Mobilfunknetz an das Mobilfunkendgerät übermittelt. Durch die geringere Datenmenge ist die Übertragung der unterschiedlichen Daten wesentlich schneller als die Übertragung des gesamten Datenblocks. Die Übertragung von aktuellen Daten über ein Mobilfunknetz an das Mobilfunkendgerät eines Mobilfunkteilnehmers wird so deutlich beschleunigt.

In einer besonders bevorzugten Ausgestaltung des erfindungsgemäßen Vermittlungsverfahrens für ein Mobilfunknetz werden nur sich ändernde Daten eines bereits angeforderten Datenblocks in den Zwischenspeicher übertragen. Gleiche Daten sind bereits im Zwischenspeicher gespeichert und werden wieder verwendet. Durch die geringere Datenmenge erfolgt die Übertragung in den Zwischenspeicher schneller. Dem Mobilfunkteilnehmer werden aktuelle Datenblöcke durch die Wiederverwendung von gleichen und im Zwischenspeicher gespeicherten Daten beschleunigt zugestellt. Weitere Vorteile durch die kleinere zu übertragende Datenmenge ist die Kostenersparnis für den Mobilfunkteilnehmer und die Schonung der Mobilfunknetzressourcen.

Bei einer vorteilhaften Ausbildung des Vermittlungsverfahrens für ein Mobilfunknetz bestehen die übertragenen Daten aus Filmsequenzen. Eine Filmsequenz besteht aus einer Folge von Einzelbildern, die wiederum aus vielen Bildpunkten aufgebaut sind. Bei zwei aufeinander folgenden Einzelbildern ändern sich meistens nicht alle Bildpunkte. Durch die Speicherung des vorhergehenden Einzelbildes im Zwischenspeicher werden zur Übermittlung des folgenden Einzelbildes nur die unterschiedlichen Bildpunkte über das Mobilfunknetz übertragen. Gleiche, schon übertragene Bildpunkte werden mit Hilfe des Zwischenspeichers wieder verwendet. Durch dieses Vorgehen wird die zu Übermittelnde Datenmenge erheblich reduziert. Die Übertragung dieser reduzierten Datenmenge über das Mobilfunknetz ist wesentlich schneller als die Übertragung aller Bildpunkte der Einzelbilder.

In einer weiteren vorteilhaften Ausgestaltung des Vermittlungsverfahrens für ein Mobilfunknetz wird das Mobilfunknetz mit einem Festnetz, insbesondere einem LAN (Local Area Network), gekoppelt. Durch die Kopplung des Mobilfunknetzes mit einem LAN oder anderen Netzwerken, wie beispielsweise dem Internet oder einem Intranet kann das Vermittlungsverfahren Daten aus diesen Netzen anfordern und an das Mobilfunkendgerät vermitteln. Dem Mobilfunkteilnehmer wird der Zugriff auf Daten eines Festnetzes, insbesondere eines LAN ermöglicht. Mit dem oben genannten Verfahrensschritt der Zwischenspeicherung werden die Daten beschleunigt über das Mobilfunknetz an das Mobilfunkendgerät übertragen.

Gemäß einer besonders bevorzugten Ausbildung des Vermittlungsverfahrens für ein Mobilfunknetz werden die zwischengespeicherten Daten in dem Zwischenspeicher des Mobilfunkendgeräts für den späteren Zugriff gespeichert. Bei einer Anforderung der Daten greift das Mobilfunkendgerät auf die im Zwischenspeicher gespeicherten Daten zu. Der Zugriff auf Daten im Zwischenspeicher ist deutlich schneller als die Übermittlung der Daten über das Mobilfunknetz. Dem Mobilfunkteilnehmer werden Daten beschleunigt zugestellt.

Bei einer vorteilhaften Ausgestaltung des Mobilfunkendgeräts für ein Mobilfunknetz enthält der Zwischenspeicher Daten des Datennetzwerks und/oder Zugriffsadressen, auf die bereits zugegriffen wurde. Dadurch wird bei einer erneuten Anforderung von Daten durch den Mobilfunkteilnehmer oder einem mit dem Mobilfunkendgerät verbundenem Gerät die Wiederverwendung gleicher Daten möglich. Die zeitaufwendige und mit Kosten verbundene Übertragung gleicher Daten über das Mobilfunknetz wird vermieden. Gegebenenfalls müssen nur veränderte Daten über das Mobilfunknetz übertragen werden. Der Mobilfunkteilnehmer oder das Gerät erhalten die angeforderten Daten umgehend aus dem Zwischenspeicher und damit deutlich schneller als bei einer erneuten Übermittlung aller Daten über das Mobilfunknetz. Weiterhin entfallen für den Mobilfunkteilnehmer die Kosten einer erneuten Übertragung schon empfangener Daten, sofern der Mobilfunktarif nach Datenvolumen abrechnet. Ein weiterer Vorteil dieser Variante des erfindungsgemäßen Mobilfunkendgeräts ist die Entlastung der Mobilfunknetzwerkressourcen durch die Vermeidung der wiederholten Übertragung von bereits übermittelten Daten.

In einer bevorzugten Ausbildung des Mobilfunkendgeräts für ein Mobilfunknetz ist der Zwischenspeicher nicht-flüchtig ausgebildet. So bleiben die Daten bei einer Unterbrechung der Stromversorgung erhalten. Der Mobilfunkteilnehmer kann das Mobilfunkendgerät bei Nichtnutzung ausschalten, ohne das die Daten im Zwischenspeicher verloren gehen. Dadurch wird es dem Mobilfunkteilnehmer ermöglicht, Stromkosten zu sparen oder eventuell vorhandene Akkus zu schonen, ohne auf die beschleunigte Übertragung von Daten durch das erfindungsgemäße Vermittlungsverfahren zu verzichten. Weiterhin sind die zwischengespeicherten Daten und damit auch das Vermittlungsverfahren vor einem Stromausfall geschützt.

Gemäß einer vorteilhaften Ausgestaltung des Vermittlungsservers in einem Mobilfunknetz ist eine Übertragungseinheit vorgesehen, welche Daten des Zwischenspeichers zum Mobilfunkendgerät übermittelt, bevor eine Anforderung für einen Zugriff erfolgt. Durch diese vorausschauende Übermittlung mittels der Übertragungseinheit wird beispielsweise die aktuelle Version schon früher angeforderter Daten an das Mobilfunkendgerät übermittelt. Dem Mobilfunkteilnehmer oder einem mit dem Mobilfunkendgerät verbundenem Gerät werden die aktuellen Daten sofort durch das Mobilfunkendgerät zur Verfügung gestellt. Die Übertragung kann beispielsweise nach einer Aktualisierung der Daten im Datennetzwerk vorgenommen werden. So werden dem Mobilfunkteilnehmer oder einem mit dem Mobilfunkendgerät verbundenen Gerät aktualisierte Daten unmittelbar übermittelt.

Bei einer weiteren vorteilhaften Ausbildung des Vermittlungsservers in einem Mobilfunknetz übermittelt die Übertragungseinheit die Daten in einen Zwischenspeicher des Mobilfunkendgeräts für einen späteren Zugriff. Durch die Speicherung der Daten in einem Zwischenspeicher des Mobilfunkendgeräts kann später direkt auf die Daten zugegriffen werden. Bei einer erneuten Anforderung durch den Mobilfunkteilnehmer oder einem mit dem Mobilfunkendgerät verbundenem Gerät werden die aktuellen Daten sofort durch das Mobilfunkendgerät zur Verfügung gestellt. Es wird die zeitaufwendige Übertragung der Daten über das Mobilfunknetz bei der Anforderung der Daten vermieden. Vorteilhaft bei dieser Ausbildung des Vermittlungsservers mit einer Übertragungseinheit ist ferner, dass der Zeitpunkt der Übertragung frei wählbar ist. So kann beispielsweise ein Übermittlungszeitraum gewählt werden, bei dem eine geringe Auslastung des Mobilfunknetzes vorliegt, um die Netzwerkressourcen zu schonen, oder in dem ein besonders günstiger Tarif für eine Verbindung liegt.

In einer vorteilhaften Ausgestaltung des Vermittlungsservers in einem Mobilfunknetz, mit dem Daten aus einem Datennetzwerk über das Mobilfunknetz an ein Mobilfunkendgerät vermittelt werden, ist das Datennetz das Internet und/oder ein Intranet. So wird dem Mobilfunkteilnehmer der beschleunigte Zugriff auf die unüberschaubare Anzahl von Daten und Anwendungen im Internet, wie beispielsweise Webseiten im HTML- (Hypertext Markup Language) Format oder Multimedia-Daten ermöglicht. Ein Intranet kann nur von einer festgelegten Gruppe von Mitgliedern einer Organisation oder eines Unternehmens genutzt werden. Ein Mitglied hat mit Hilfe des erfindungsgemäßen Vermittlungsverfahrens beschleunigten Zugriff auf Daten, wie etwa Dokumente oder Formulare. Dadurch wird ihm beispielsweise mobile Telearbeit erleichtert.

Weitere Vorteile ergeben sich aus dem Gegenstand der Unteransprüche, sowie der Zeichnung mit der dazugehörigen Beschreibung.

### Kurze Beschreibung der Zeichnung

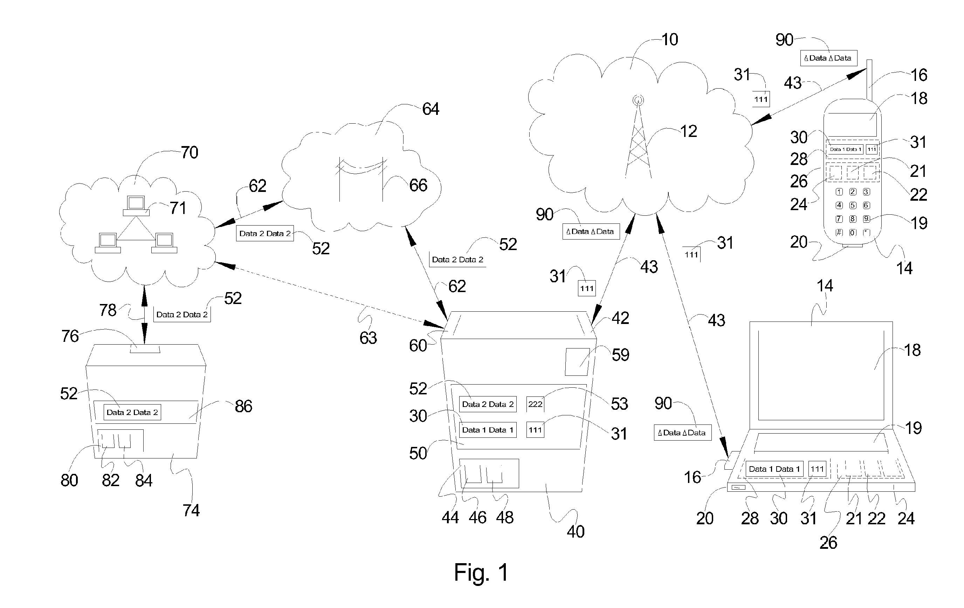

- Fig. 1: zeigt in einer schematischen Prinzipskizze ein erstes Ausführungsbeispiel eines Vermittlungsverfahrens für ein Mobilfunknetz zur Übertragung von Daten von einem Vermittlungsserver über das Mobilfunknetz zu einem Mobilfunkendgerät mit einem Zwischenspeicher für übermittelte Daten.

### Bevorzugtes Ausführungsbeispiel

In Fig. 1 wird mit 10 ein Mobilfunknetz bezeichnet. Das Mobilfunknetz 10 enthält alle Bestandteile, die für ein Mobilfunknetz, beispielsweise nach dem GSM- oder UMTS-Standard, erforderlich sind. Mobilfunknetze nach dem GSM- und UMTS-Standard sind dem Fachmann geläufig und werden der Einfachheit halber nur durch eine Wolke mit einem darin enthaltenen Mast 12 stilisiert dargestellt. Mittels eines Mobilfunkendgerätes 14 können Mobilfunkteilnehmer über das Mobilfunknetz 10 kommunizieren. Dazu enthält das Mobilfunkendgerät 14 eine geeignete Mobilfunkeinheit 16, beispielsweise im Fall eines Notebooks, eine MCC-Karte (Mobile Connect Card UMTS) von Vodafone, zum Senden und Empfangen von Daten über das Mobilfunknetz 10. Im Falle eines Handys eine für diese Art Mobilfunkendgerät 14 entsprechende Mobilfunkeinheit 16 zum Senden und Empfangen von Daten.

Das Mobilfunkendgerät 14 weist ferner eine Anzeige 18 auf, welche die Darstellung von Nummern, Adressen oder Bedienermenüs zur Bedienung des Mobilfunkendgeräts 14 ermöglicht. Außerdem können mit der Anzeige 18 auch Multimedia-Dateien oder Webseiten dargestellt werden. Die Steuerung des Mobilfunkendgeräts 14 erfolgt durch den Mobilfunkteilnehmer über ein Bedienungsmodul 19. Über das Bedienungsmodul 19 werden die jeweils gewünschten Menüs angesteuert oder sonstige Steuerungsbefehle zur Steuerung des Mobilfunkendgeräts 14 eingegeben. Weiterhin können über das Bedienungsmodul 19 Telefonnummern oder Datenzugriffsadressen eingegeben werden. Über eine im Mobilfunkendgerät 14 enthaltene Geräteschnittstelle 20 kann eine Verbindung zu anderen Geräten oder Netzwerken hergestellt werden. Dies kann als drahtgebundenen Verbindungen beispielsweise im USB- oder Ethernet-Standard (USB= Universal Serial Bus) erfolgen. Bei einer drahtlosen Verbindungen werden u. a. die Funkstandards Bluetooth oder WLAN (**W**ireless **L**ocal **A**rea **N**etwork) verwendet.

Daten, wie Adressen, Telefonnummern oder Datenzugriffsadressen, aber auch über das Mobilfunknetz 10 übertragene Daten, wie beispielsweise Webseiten, Multimediadaten oder Filmsequenzen werden in einem Speicher 22 gespeichert. Ein Prozessor 24 kann zur Verarbeitung dieser Daten auf den Speicher 22 zugreifen. Außerdem verfügt das Mobilfunkendgerät 14 über eine Schnittstelle 21 zum Empfang von Daten aus einem Datennetzwerk 70. Mit dieser Schnittstelle 21 können Daten von Datendienste des Datennetzwerks 70, wie beispielsweise Webseiten, E-Mails oder Newsgroups im Internet empfangen werden. Als Steuereinheit 26 wird eine Einheit des Mobilfunkendgeräts 14 bezeichnet, die den Prozessor 24, den Speicher 22 und die Schnittstelle 21 enthält. Ferner ist in dem Mobilfunkendgerät 14 ein Zwischenspeicher 28 vorhanden, in dem von dem Mobilfunknetz 10 empfangene Daten 30 und/oder deren Zugriffsadresse zwischengespeichert werden. Der Prozessor 24 kann später auf die Daten 30 zugreifen und diese verarbeiten oder über die Geräteschnittstelle 20 an andere Geräte senden.

Ferner wird in Fig. 1 mit 40 ein Vermittlungsserver bezeichnet. Der Vermittlungsserver 40 ist Bestandteil des Mobilfunknetzes 10 und verfügt über eine Schnittstelle 42, mit der eine Verbindung 43 über das Mobilfunknetz 10 zum Mobilfunkendgerät 14 hergestellt werden kann. Weiterhin enthält der Verbindungsserver 40 eine Steuereinheit 44 mit einem Prozessor 46 und einem Arbeitsspeicher 48. Mit der Steuereinheit 44 kann der Vermittlungsserver 40 Datenanforderungen vom Mobilfunkendgerät 14 bearbeiten und über eine Schnittstelle 60 zu einem Datennetzwerk 70 weiterleiten. Umgekehrt können mit Hilfe der Steuereinheit 44 über die Schnittstelle 60 von dem Datennetzwerk 70 empfangene Daten 52 an das Mobilfunkendgerät 14 vermittelt werden. Dazu enthält der Vermittlungsserver 40 einen Zwischenspeicher 50 zur Speicherung der empfangenen Daten 52 und eine Übertragungseinheit 59 zum Übermitteln der Daten 52 an das Mobilfunkendgerät 14.

Mit der Schnittstelle 60 kann über ein Festnetz 64 eine Verbindung 62 zum Datennetzwerk 70 hergestellt werden. Das Festnetz 64 enthält alle Bestandteile, die für ein Festnetz, beispielsweise nach dem DSL-, ISDN- oder Analog-Standard erforderlich sind. Festnetze nach dem DSL-, ISDN- oder Analog-Standard sind dem Fachmann geläufig und werden der Einfachheit halber nur durch eine Wolke mit darin enthaltene Telegrafenmasten 66 stilisiert dargestellt. Alternativ ist auch eine direkte Verbindung 63 zum Datennetzwerk 70 möglich.

Das Datennetzwerk 70 ist beispielsweise ein LAN, ein Intranet oder das Internet. Diese Datennetzwerke sind dem Fachmann geläufig und werden der Einfachheit halber ebenfall nur durch eine Wolke mit darin enthaltenen Computern 71 stilisiert dargestellt. In dem Datennetzwerk 70 ist mindestens ein Datenserver 74 vorhanden, der dem Datennetzwerk 70 über eine Schnittstelle 76 und eine Verbindung 78 Daten zur Verfügung stellen kann. Dazu beinhaltet der Datenserver 74 eine Steuereinheit 80 mit einem Prozessor 82 und einem Arbeitsspeicher 84. Mit der Steuereinheit 80 und der Schnittstelle 76 können die im Speicher 86 gespeicherten Daten 52 auf Anforderung an andere, mit dem Datennetzwerk 70 verbundene Geräte übermittelt werden. Die Daten 52 können beispielsweise im Internet bzw. in einem Intranet Webseiten, Audio-, Video- oder Multimediadaten, Dokumente oder Formulare sein.

Daten aus einem Datennetzwerk 70, wie beispielsweise Webseiten, kann ein Mobilfunkteilnehmer oder ein über die Geräteschnittstelle 20 mit dem Mobilfunkendgerät 14 verbundenes Gerät mit einer Zugriffsadresse anfordern. Dazu wird die Zugriffsadresse mit dem Bedienungsmodul 19 eingegeben oder über die Geräteschnittstelle 20 an das Mobilfunkendgerät 14 übermittel. Werden die Daten zum ersten Mal angefordert, sendet das Mobilfunkendgerät 14 die Zugriffsadresse mittels der Mobilfunkeinheit 16 über das Mobilfunknetz 10 an den Vermittlungsserver 40. Der Vermittlungsserver 40 leitet die Zugriffsadresse über eine Festnetzverbindung 62, 63 an das entsprechende Datennetzwerk 70 weiter. In dem Datennetzwerk 70 wird die Anfrage über einen Verbindung 78 an den zuständigen Datenserver 74, z. B. ein Webserver im Internet, weiter vermittelt.

Der Datenserver 74 sendet die angeforderten Daten über die Verbindung 78, das Datennetzwerk 70 und eine Festnetzverbindung 62, 63 an den Vermittlungsserver 40. Im Vermittlungsserver 40 werden die Daten 30 im Zwischenspeicher 50 gespeichert und eine Prüfsumme 31 erstellt. Die Prüfsumme 31 der Daten 30 ist eindeutig: Kleinste Veränderungen der Daten 30 führen zu anderen Prüfsummen. Zur Berechnung der Prüfsumme 31 sind verschiedene Verfahren, wie etwa der MD5 Hash-Code Algorithmus, bekannt. Die Prüfsumme 31 wird ebenfalls im Zwischenspeicher gespeichert. Anschließend werden die Daten 30 und die Prüfsumme 31 durch die Verbindung 43 über das Mobilfunknetz 10 an das Mobilfunkendgerät 14 übertragen. Im Mobilfunkendgerät 14 werden die Daten 30 und die Prüfsumme 31 im Zwischenspeicher 28 gespeichert und können anschließend mit Hilfe der Steuereinheit 26, dem Bedienungsmodul 19 und der Anzeige 18 dargestellt und bearbeitet werden. Über die Geräteschnittstelle 20 können die Daten 30 an andere Geräte weitergeleitet werden. Alternativ kann die Prüfsumme 31 auch in dem Mobilfunkendgerät 14 berechnet werden. Die Übertragung der Prüfsumme 31 von dem Vermittlungsserver 40 zum Mobilfunkendgerät 14 entfällt dann.

Werden die Daten 30 später erneut durch den Mobilfunkteilnehmer oder ein mit der Geräteschnittstelle 20 verbundenem Gerät angefordert, sendet das Mobilfunkendgerät 14 nur die im Zwischenspeicher 28 gespeicherte Prüfsumme 31 über das Mobilfunknetz 10 an den Vermittlungsserver 40. Der Vermittlungsserver 40 erkennt anhand der auch in seinem Zwischenspeicher 50 gespeicherten Prüfsumme 31 die angeforderten Daten 30. Entsprechend dem oben beschriebenen Verfahren beim ersten Zugriff fordert der Vermittlungsserver 40 über eine Festnetzverbindung 62, 63 und dem Datennetzwerk 70 die aktuelle Version der Daten 52 beim zuständigen Datenserver 74 an.

Die vom Datenserver 74 übermittelten Daten 52 werden wiederum im Zwischenspeicher 50 gespeichert. Außerdem wird eine Prüfsumme 53 der Daten 52 erstellt und ebenfalls im Zwischenspeicher 50 gespeichert. Anschließend werden die aktuellen Daten 52 mit den alten Daten 30 verglichen. Nur veränderte Daten 90 und die neue Prüfsumme 53 werden mittels der Übertragungseinheit 50 über das Mobilfunknetz 10 an das Mobilfunkendgerät 14 gesendet. Im Mobilfunkendgerät 14 wird mit den im Zwischenspeicher 28 gespeicherten alten Daten 30 und den veränderten Daten 90 die aktuelle Version der Daten 52 ermittelt. Diese werden zusammen mit der Prüfsumme 53 im Zwischenspeicher 28 gespeichert und können dann mit dem Mobilfunkendgerät 14 betrachtet oder bearbeitet werden. Das Verfahren kann bei einer zweiten erneuten Anforderung der Daten 52 mit der Prüfsumme 53 entsprechend wiederholt werden.

Durch die Wiederverwendung von Daten 30 müssen nur veränderte Daten 90 und so eine wesentlich kleinere Datenmenge über das Mobilfunknetz 10 übertragen werden. Die Übermittlung erfolgt schneller und der Mobilfunknutzer kann beschleunigt auf Daten 52 aus dem Datennetzwerk 70 zugreifen.

## Patentansprüche

1. Vermittlungsverfahren für ein Mobilfunknetz (10), insbesondere nach dem GSM-oder UMTS-Standard, wobei Daten (30, 52) von einem Vermittlungsserver (40) über das Mobilfunknetz (10) zu wenigstens einem Mobilfunkendgerät (14) übertragen und von dem Mobilfunkendgerät (14) verarbeitet werden, **dadurch gekennzeichnet, dass** die Daten (30), welche bereits einmal von dem Vermittlungsserver (40) durch das Mobilfunkendgerät (14) angefordert wurden, in einem Zwischenspeicher (28, 50) für den späteren Zugriff gespeichert werden.

2. Vermittlungsverfahren für ein Mobilfunknetz (10) nach Anspruch 1, **dadurch gekennzeichnet, dass** nur sich ändernde Daten (90) eines bereits angeforderten Datenblocks (30) in den Zwischenspeicher (28, 50) übertragen werden.

3. Vermittlungsverfahren für ein Mobilfunknetz (10) nach einem der Ansprüche 1 oder 2, **dadurch gekennzeichnet, dass** die übertragenen Daten (30, 52, 90) aus Filmsequenzen bestehen.

4. Vermittlungsverfahren für ein Mobilfunknetz (10) nach einem der Ansprüche 1 bis 3, **dadurch gekennzeichnet, dass** das Mobilfunknetz (10) mit einem Festnetz (70), insbesondere einem LAN, gekoppelt wird.

5. Vermittlungsverfahren für ein Mobilfunknetz (10) nach einem der Ansprüche 1 bis 4, **dadurch gekennzeichnet, dass** die zwischengespeicherten Daten (30) in dem Zwischenspeicher (28) des Mobilfunkendgeräts (14) für den späteren Zugriff gespeichert werden.

6. Mobilfunkendgerät (14) für ein Mobilfunknetz (10), insbesondere nach dem GSM-oder UMTS-Standard, enthaltend
(a) eine Steuereinheit (26) mit einem Prozessor (22) und einem Arbeitsspeicher (24),
(b) ein Bedienungsmodul (19) zum Bedienen des Mobilfunkendgeräts (14),
(c) eine Anzeige (18),
(d) eine Sende und/oder Empfangseinheit (16) zum Austauschen von Daten über das Mobilfunknetz (10),
(e) Schnittstelle (21) für den Empfang von Daten aus einem Datennetzwerk,
**dadurch gekennzeichnet, dass**
(f) ein Zwischenspeicher (28) vorgesehen ist, in welchem Daten (30, 52, 90) aus dem Datennetzwerk (70) und/oder Zugriffsadressen für einen späteren Zugriff zwischengespeichert werden.

7. Mobilfunkendgerät (14) für ein Mobilfunknetz (10) nach Anspruch 6, **dadurch gekennzeichnet, dass** der Zwischenspeicher (28) Daten (30) des Datennetzwerks und/oder Zugriffsadressen enthält, auf die bereits zugegriffen wurde.

8. Mobilfunkendgerät (14) nach einem der Ansprüche 6 bis 7, **dadurch gekennzeichnet, dass** der Zwischenspeicher (28) nicht-flüchtig ausgebildet ist.

9. Vermittlungsserver (40) in einem Mobilfunknetz (10), welcher Daten (30, 52) aus einem Datennetzwerk (70) über das Mobilfunknetz (10) an ein Mobilfunkendgerät (14) vermittelt, enthaltend
(a) eine Steuereinheit (44) mit einem Prozessor (46) und einem Arbeitsspeicher (48),
(b) eine Schnittstelle (60) zum Datennetzwerk,
(c) eine Verbindung (43) zu dem Mobilfunkendgerät (14),
**dadurch gekennzeichnet, dass**
(d) ein Zwischenspeicher (50) vorgesehen ist, welcher Daten (30, 52) aus dem Datennetzwerk (70) und/oder Zugriffsadressen bei Anforderung des Mobilfunkendgeräts (14) für einen erneuten Zugriff auf dieselben Daten (30, 52) und/oder Zugriffsadressen zwischenspeichert.

10. Vermittlungsserver (40) in einem Mobilfunknetz (10), welcher Daten (30, 52) aus einem Datennetzwerk (70) über das Mobilfunknetz (10) an ein Mobilfunkendgerät (14) vermittelt nach Anspruch 9, **gekennzeichnet durch** eine Übertragungseinheit (59), welche Daten (30, 52, 90) des Zwischenspeichers (50) zum Mobilfunkendgerät (14) übermittelt, bevor eine Anforderung für einen Zugriff erfolgt.

11. Vermittlungsserver (40) in einem Mobilfunknetz (10), welcher Daten (30, 52) aus einem Datennetzwerk (70) über das Mobilfunknetz (10) an ein Mobilfunkendgerät (14) vermittelt nach Anspruch 10, **dadurch gekennzeichnet, dass** die Übertragungseinheit (59) die Daten (30, 52) in einen Zwischenspeicher (28) des Mobilfunkendgerät (14) für einen späteren Zugriff übermittelt.

12. Vermittlungsserver (40) in einem Mobilfunknetz (10), welcher Daten (30, 52) aus einem Datennetzwerk (70) über das Mobilfunknetz (10) an ein Mobilfunkendgerät (14) vermittelt nach einem der Ansprüche 9 bis 11, **dadurch gekennzeichnet, dass** das Datennetz (70) das Internet und/oder ein Intranet ist.
